# EUROPÄISCHE PATENTSCHRIFT

(11) **EP 2 185 898 B1**
(45) Veröffentlichungstag und Bekanntmachung des Hinweises auf die Patenterteilung: **15.07.2020**
(21) Anmeldenummer: 08736513.6
(22) Anmeldetag: 23.04.2008
(51) Int. Cl.: G01C 21/32, G08G 1/01, G08G 1/0967, G09B 29/10, H04W 4/02, H04L 29/08

(54) **ONLINEERSTELLUNG EINER DIGITALEN KARTE**
ONLINE ESTABLISHMENT OF A DIGITAL MAP
CRÉATION EN-LIGNE D'UNE CARTE NUMÉRIQUE

(30) Priorität: 29.08.2007 DE 102007040973; 05.03.2008 DE 102008012654
(43) Veröffentlichungstag der Anmeldung: 19.05.2010
(73) Patentinhaber: Continental Teves AG & Co. OHG, 60488 Frankfurt am Main (DE)
(72) Erfinder: STÄHLIN, Ulrich, 65760 Eschborn (DE)
(86) Internationale Anmeldenummer: PCT/EP2008/054944
(87) Internationale Veröffentlichungsnummer: WO 2009/030522

(56) Entgegenhaltungen:
- EP-A- 1 508 777
- EP-A- 1 939 589
- DE-A1- 10 030 932
- DE-A1- 10 258 470
- DE-A1- 19 742 414
- US-A1- 2005 065 711

## Beschreibung

### Gebiet der Erfindung

Die Erfindung betrifft die Navigations- und Sicherheitstechnik für Fahrzeuge. Insbesondere betrifft die Erfindung eine Aktualisierungseinrichtung zur Erstellung und Aktualisierung einer digitalen Karte, ein Aktualisierungssystem, die Verwendung einer Aktualisierungseinrichtung in einem Fahrzeug, ein Verfahren zur Erstellung und Aktualisierung einer digitalen Karte für ein Fahrzeug, ein Computerprogrammprodukt und ein computerlesbares Medium.

### Technologischer Hintergrund

Die rasante Zunahme des Fahrzeugverkehrs auf den Straßen und die damit verbundenen Staus und Fahrzeitverlängerungen führen weltweit zu erhöhten Anstrengungen, Verkehrszustände zu erkennen und diese bei der Routenwahl bzw. bei einer Routenberechnung in Navigationssystemen oder Fahrerassistenzsystemen zu berücksichtigen.

Viele Fahrerassistenzsysteme können durch das Hinzunehmen einer digitalen Karte deutlich aufgewertet oder verbessert werden. Digitale Karten sind jedoch meist schon bei ihrer Auslieferung veraltet. Von daher ist eine Aktualisierung (Update) der Karte unerlässlich, wenn die digitale Karte mit den aktuellen Verhältnissen übereinstimmen soll. Diese Aktualisierungen umfassen jedoch eine große Datenmenge, da immer die komplette Karte auf den neuesten Stand gebracht wird.

Weiterhin bilden die Aktualisierungen im Allgemeinen lediglich eine Straßensituation ab, die bereits einen geraumen Zeitpunkt zurückliegt. Die Ursache hierfür liegt u. a. darin, dass die zu verarbeitende Datenmenge verhältnismäßig groß ist und es somit unter Umständen relativ lange dauert, bis eine entsprechende Aktualisierungsdatei erstellt und an das Fahrzeugsystem übertragen ist.

Die deutsche Patentanmeldung DE 100 30 932 A1 beschreibt ein Verfahren zur Erzeugung, Prüfung, Ergänzung und/oder Aktualisierung von Straßenkartendaten, wobei die Position eines Fahrzeugs während der Fahrt gemessen und aufgezeichnet wird und wobei auf der Basis der gemessenen Positionsdaten die Straßenkartendaten erzeugt, geprüft, ergänzt und/oder aktualisiert werden.

### Zusammenfassung der Erfindung

Es ist eine Aufgabe der Erfindung, eine verbesserte Erstellung und Aktualisierung einer digitalen Karte bereitzustellen.

Es sind eine Aktualisierungseinrichtung, ein Aktualisierungssystem, die Verwendung einer Aktualisierungseinrichtung in einem Fahrzeug, ein Verfahren zur Erstellung und Aktualisierung einer digitalen Karte, ein Computerprogrammprodukt und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Aktualisierungseinrichtung, das Aktualisierungssystem, die Verwendung, das Verfahren, das Computerprogrammprodukt sowie das computerlesbare Medium.

Gemäß einem Ausführungsbeispiel der Erfindung ist eine Aktualisierungseinrichtung zur Erstellung und Aktualisierung einer digitalen Karte für ein erstes Fahrzeug angegeben, welche eine Kommunikationseinheit zum Empfang von ersten Aktualisierungsdaten und eine Aktualisierungseinheit zur Erstellung oder zur Aktualisierung eines lokalen Teils der digitalen Karte auf Basis der Aktualisierungsdaten aufweist, wobei die ersten Aktualisierungsdaten auf zumindest einem Messwert einer Position eines zweiten Fahrzeugs basieren.

In anderen Worten kann die digitale Karte auf Basis von Messwerten anderer Fahrzeuge aktualisiert werden. Auch ist es möglich, eine neue digitale Karte bzw. einen neuen Teilbereich einer digitalen Karte auf Basis dieser Messwerte zu erstellen, also neu anzulegen. Dies kann beispielsweise dann erforderlich sein, wenn der Fahrer das Gebiet der bisherigen digitalen Karte verlässt.

Auf diese Weise können sämtliche auf digitalen Karten basierende Systeme, vor allem Fahrerassistenzsysteme, die auf genaue Kartendaten angewiesen sind, oder auch Navigationssysteme, verbessert werden. Ebenso können auch Navigationssysteme, die auf eine digitale Navigationskarte zurückgreifen, verbessert werden.

Unter dem Begriff "digitale Karten" sind auch Karten für fortschrittliche Fahrerassistenzsysteme (ADAS, Advanced Driver Assistance System) zu verstehen, ohne dass eine Navigation stattfindet.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

Die kabellose Übertragung bzw. der kabellose Empfang der Aktualisierungsdaten erfolgt per GSM, UMTS, WLAN (z.B. 802.11p) oder auch per WiMax. Es ist auch die Verwendung anderer Übertragungsprotokolle möglich. Die genannten Protokolle bieten den Vorteil der bereits erfolgten Standardisierung.

Erfindungsgemäß befindet sich das zweite Fahrzeug im Umfeld des ersten Fahrzeugs, so dass die Aktualisierungsdaten einen Teil der digitalen Karte betreffen, der im Umfeld des ersten Fahrzeugs liegt.

Beispielsweise handelt es sich bei dem zweiten Fahrzeug um ein dem ersten Fahrzeug vorausfahrendes Fahrzeug, oder um ein dem ersten Fahrzeug entgegenkommendes Fahrzeug. Auf diese Weise können Übertragungstechniken eingesetzt werden, welche nur eine relativ kurze Reichweite aufweisen, beispielsweise Fahrzeug-zu-Fahrzeug Kommunikation auf Basis von WLAN (802.11p). Auf diese Weise kann automatisch erreicht werden, dass nur Aktualisierungsdaten benachbarter Fahrzeuge empfangen werden. Somit kann der Datenverkehr reduziert werden und es findet jeweils nur eine Aktualisierung des Bereichs der digitalen Karte statt, an dem sich das erste Fahrzeug gerade befindet.

Gemäß einem weiteren Ausführungsbeispiel der Erfindung weist die Aktualisierungseinrichtung eine Eingabeeinrichtung auf, über die der Fahrer bestimmen kann, welcher Teil der digitalen Karte gerade aktualisiert werden soll.

Beispielsweise kann der Fahrer bestimmen, dass immer nur der Teil der digitalen Karte aktualisiert wird, den das Fahrzeug innerhalb beispielsweise der nächsten zehn Minuten oder innerhalb der nächsten Stunde voraussichtlich erreichen wird. Den entsprechenden Schwellwert kann der Fahrer selber setzen. Hierdurch kann die zu übertragende Datenmenge reduziert werden. Auch kann der Fahrer von sich aus entscheiden, ob er einen ganz anderen Kartenausschnitt oder sogar die gesamte digitale Karte aktualisiert haben möchte. Beispielsweise kann er eine bestimmte Route in das System eingeben und bestimmen, dass diese Route aktualisiert werden soll, ggf. in Kombination mit Alternativrouten. Dies kann beispielsweise vor Antritt einer Urlaubsreise günstig sein.

Eine Aktualisierung der gesamten digitalen Karte ist also nicht notwendig, vielmehr können ausgewählte Teilbereiche der Karte aktualisiert werden.

Gemäß einem weiteren Ausführungsbeispiel der Erfindung weist die Aktualisierungseinrichtung zusätzlich eine Erfassungseinrichtung zur Erfassung eines Messwerts der aktuellen Position des ersten Fahrzeugs auf, wobei die Kommunikationseinheit zur Übermittlung von zweiten Aktualisierungsdaten, die auf dem erfassten Messwert basieren, an das zweite Fahrzeug ausgeführt ist.

In anderen Worten ist die Aktualisierungseinrichtung nicht nur in der Lage, ausgewählte Teilbereiche der digitalen Karte zu aktualisieren. Vielmehr dient die Aktualisierungseinrichtung auch dazu, eine solche Aktualisierung für das eigene Fahrzeug und für andere Fahrzeuge erst möglich zu machen, indem nämlich die für die Aktualisierung interessanten Messwerte erfasst und übermittelt werden.

Bei diesen Messwerten kann es sich neben der aktuellen Position des Fahrzeugs und Eingriffen eines ABS-Systems, eines ASR-Systems oder eines ESP-Systems auch um weitere Messwerte handeln, wie beispielsweise der aktuellen Fahrzeuggeschwindigkeit oder der aktuellen Außentemperatur, ggf. in Kombination mit der Fahrzeuggeschwindigkeit.

Auf diese Weise können die Aktualisierungsdaten neben den normalen Straßendaten noch weitere Hinweise, wie Gefahrenwarnungen vor Glatteis oder Nebel oder Warnungen vor Staus, enthalten.

Erfindungsgemäß werden die ersten Aktualisierungsdaten direkt von dem zweiten Fahrzeug an das erste Fahrzeug übermittelt. Zudem können die Aktualisierungsdaten auch (indirekt) von einer Zentrale an das erste Fahrzeug übermittelt werden.

Es findet also eine Übermittlung der Positionsdaten durch Fahrzeug-zu-Fahrzeug- und gegebenenfalls durch Fahrzeug-zu-Infrastruktur-Kommunikation statt.

Die dazwischen geschaltete Zentrale kann darüber hinaus zum Aufbereiten, zur Auswahl, zum Filtern oder auch einfach zu Speicherung der Aktualisierungsdaten bzw. der Messdaten ausgeführt sein.

Gemäß einem weiteren Ausführungsbeispiel der Erfindung ist die Aktualisierungseinrichtung weiterhin zur statistischen Auswertung sämtlicher empfangener Aktualisierungsdaten ausgeführt.

Auf diese Weise kann ein negativer Einfluss von Fehlmessungen verringert werden. Weiterhin können ungenaue Positionsmessungen herausgemittelt werden, so dass die Genauigkeit der digitalen Karte gesteigert werden kann.

Gemäß einem weiteren Ausführungsbeispiel der Erfindung weist die Aktualisierungseinrichtung weiterhin eine Speichereinrichtung zur Speicherung der Aktualisierung der digitalen Karte auf.

Die Speicherung kann zusätzlich oder alternativ hierzu auch in der Zentrale vorgenommen werden.

Erfindungsgemäß weist die Aktualisierungseinrichtung weiterhin eine Warneinrichtung zur Warnung des Fahrers vor Gefahren auf. Die Gefahren werden hierbei auf Basis der Aktualisierungsdaten identifiziert. Bei der Warneinrichtung kann es sich um eine akustische Warneinrichtung oder auch um eine optische Warneinrichtung, beispielsweise in Form einer Anzeige oder eines Lichtes handeln. Gemäß einem weiteren Ausführungsbeispiel der Erfindung handelt es sich bei der digitalen Karte um eine digitale Navigationskarte. Weiterhin kann es sich bei der digitalen Karte auch um eine Karte für ein Fahrerassistenzsystem handeln.

Gemäß einem weiteren Ausführungsbeispiel der Erfindung ist ein Aktualisierungssystem zur Erstellung und Aktualisierung einer digitalen Karte für ein erstes Fahrzeug angegeben, welches eine oben beschriebene erste Aktualisierungseinrichtung in einem ersten Fahrzeug und eine oben beschriebene zweite Aktualisierungseinrichtung in einem zweiten Fahrzeug aufweist. Weiterhin kann das Aktualisierungssystem eine Zentrale zum Empfang von Aktualisierungsdaten von dem ersten Fahrzeug und zum Übermitteln der Aktualisierungsdaten an das zweite Fahrzeug aufweisen.

Die Aktualisierungsdaten können von der Zentrale an bestimmte, ausgewählte Fahrzeuge gesendet werden, die sich z. B. in einem betreffenden Gebiet (in einem bestimmten Teil der digitalen Karte) befinden, sich dem Gebiet nähern oder deren Fahrer planen, das Gebiet zu befahren. Auch kann die Zentrale ausgeführt sein, bestimmte, ausgewählte Aktualisierungsdaten an sämtliche Teilnehmer zu versenden, wenn es sich beispielsweise um wichtige Daten handelt, die alle Teilnehmer betreffen.

Gemäß einem weiteren Ausführungsbeispiel der Erfindung ist die Verwendung einer oben beschriebenen Aktualisierungseinrichtung in einem Fahrzeug angegeben.

Erfindungsgemäß ist ein Verfahren zur Erstellung und Aktualisierung einer digitalen Karte für ein erstes Fahrzeug nach Anspruch 9 angegeben.

Es können also eine Vielzahl von Fahrzeugen ihre Positionen messen und (direkt oder über den Umweg der Zentrale) entsprechende Aktualisierungsdaten an das erste Fahrzeug übermitteln. Das erste Fahrzeug kann dann sämtliche empfangenen Daten auswerten und daraufhin eine Aktualisierung oder Neuerstellung seiner digitalen Karte vornehmen.

Erfindungsgemäß ist ein Computerprogrammprodukt angegeben, das, wenn es auf einem Prozessor ausgeführt wird, den Prozessor anleitet, die oben beschriebenen Verfahrensschritte durchzuführen.

Erfindungsgemäß ist ein computerlesbares Medium angegeben, auf dem ein Computerprogrammprodukt gespeichert ist, das, wenn es auf einem Prozessor ausgeführt wird, den Prozessor anleitet, die oben beschriebenen Verfahrensschritte durchzuführen.

Eine grundsätzliche Überlegung der Erfindung ist darin zu sehen, dass eine digitale Karte in einem Fahrzeug lokal um die aktuelle Position des Fahrzeugs auf den neuesten Stand gebracht wird, ohne dass hierbei eine kostenpflichtige Kommunikation mit einem Kartenhersteller oder einem Serviceprovider notwendig ist. Auch sind keine kompletten Aktualisierungen (Updates) der kompletten Karte notwendig und die Aufbereitungszeit durch einen Kartenhersteller oder Serviceprovider entfällt. Die Aktualisierung der Karte ist lediglich auf die aktuelle Position des Fahrzeugs bezogen und so aktuell wie möglich.

Im Folgenden werden mit Verweis auf die Figuren bevorzugte Ausführungsbeispiele der Erfindung beschrieben.
Fig. 1 zeigt eine schematische Darstellung einer Aktualisierungseinrichtung gemäß einem Ausführungsbeispiel der Erfindung.
Fig. 2 zeigt eine schematische Darstellung eines Aktualisierungssystems gemäß einem Ausführungsbeispiel der Erfindung.
Fig. 3 zeigt eine schematische Darstellung eines Ausschnitts einer digitalen Navigationskarte gemäß einem Ausführungsbeispiel der Erfindung.
Fig. 4 zeigt ein Flussdiagramm eines Verfahrens gemäß einem Ausführungsbeispiel der Erfindung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

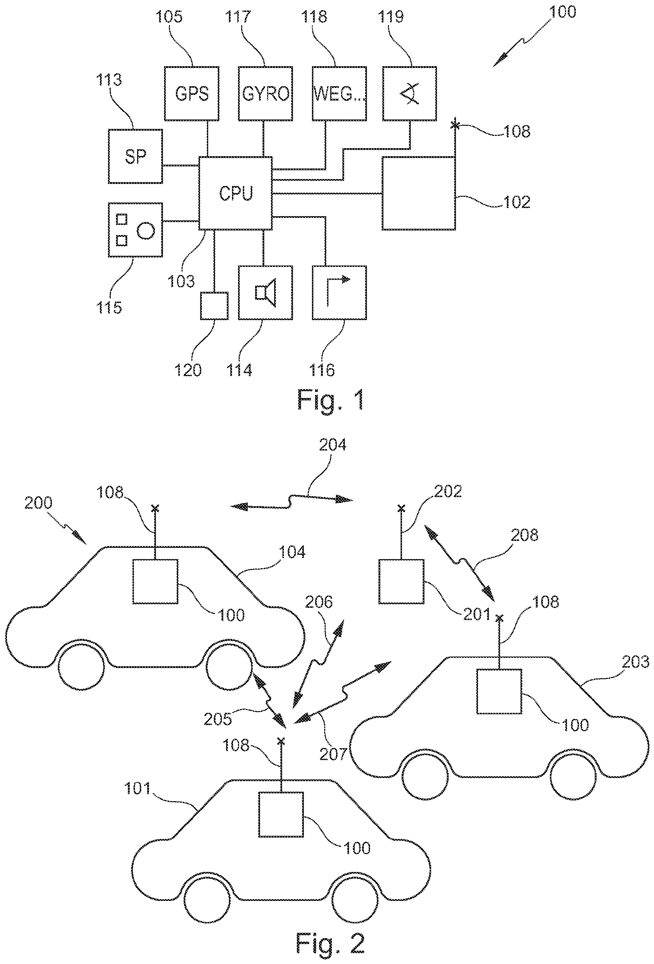

Fig. 1 zeigt eine schematische Darstellung von Komponenten einer Aktualisierungseinrichtung 100 für ein Fahrzeug gemäß einem Ausführungsbeispiel der Erfindung. Die Aktualisierungseinrichtung 100 ist beispielsweise in dem Fahrzeug installiert und dient neben der Aktualisierung einer digitalen Karte auch zur Neuerstellung von digitalen Karten oder Kartenbereichen, die bisher nicht gespeichert waren.

Die Aktualisierungseinrichtung 100 weist eine Kommunikationseinheit 102 mit einer Antenne 108 auf. Über diese Kommunikationseinheit 102 kann die Aktualisierungseinrichtung mit anderen Fahrzeugen und ggf. mit einem Server einer Verkehrsleitzentrale kommunizieren. Weiterhin weist die Aktualisierungseinrichtung 100 eine Aktualisierungseinheit 103 mit einem Prozessor auf, welche die Einrichtung 100 steuert und die Aktualisierung bzw. Neuerstellung der digitalen Karte vornimmt.

Die Aktualisierungseinheit 103 ist mit einer Eingabeeinheit 115 verbunden. Über die Eingabeeinheit 115 können verschiedene Einstellungen der Einrichtung vorgenommen werden. Beispielsweise kann für eine Navigationseinheit ein Zielort und ggf. auch ein Standort gewählt werden. Die Eingabe des Zielortes ist dabei beispielsweise durch Eingabe des vollständigen Namens des Zielortes oder auch durch Auswahl aus einer Liste, die auf einer optischen Ausgabeeinheit, wie beispielsweise einem Monitor 116, dargestellt wird, möglich. Auf dem Monitor 116 werden auch die Zielführungsinformationen ausgegeben. Darüber hinaus können die Zielführungsinformationen auch über eine akustische Ausgabeeinheit 114 ausgegeben werden. Über diese akustische Ausgabeeinheit 114 können auch Warnhinweise ausgegeben werden. Die Ausgabe über die akustische Ausgabeeinheit 114 hat den Vorteil, dass der Fahrer weniger vom aktuellen Verkehrsgeschehen abgelenkt wird. In einem Speicherelement 113, das mit der zentralen Recheneinheit bzw. Aktualisierungseinheit 103 verbunden ist oder in der Aktualisierungseinheit 103 integriert ist, sind die Landkartendaten (digitale Kartendaten) in Form von Datensätzen abgelegt. Beispielsweise sind in dem Speicherelement 113 auch zusätzliche Informationen über Verkehrsbeschränkungen und dergleichen abgelegt und den Datensätzen zugeordnet.

Die Aktualisierungseinheit 103 kann auch an ein Fahrerassistenzsystem 120 angeschlossen sein.

Zur Bestimmung der aktuellen Fahrzeugposition weist die Aktualisierungseinrichtung 100 eine Positionierungseinheit 105 mit einem GPS-Empfänger auf, der zum Empfang von Positionssignalen von GPS-Satelliten ausgelegt ist. Natürlich kann die Positionierungseinheit (Erfassungseinheit) 105 auch für andere Satellitennavigationssysteme, wie beispielsweise Galileo, ausgeführt sein.

Da die GPS-Signale aber beispielsweise im innerstädtischen Bereich nicht immer empfangbar sind, weist die Einrichtung 100 zur Durchführung einer Koppelnavigation zudem einen Richtungssensor 117, einen Wegstreckensensor 118 und ggf. auch einen Lenkradwinkelsensor 119 auf. Signale des GPS-Empfängers, des Wegstreckensensors, des Richtungssensors und/oder des Lenkradwinkelsensors werden beispielsweise in dem Prozessor 103 bearbeitet. Die aus diesen Signalen ermittelte Fahrzeugposition wird über Map Matching mit den Straßenkarten abgeglichen. Die so gewonnene Zielführungsinformation wird über den Monitor 116 schließlich ausgegeben.

Da die digitalen Kartendaten relativ schnell veraltet sind, erfolgt erfindungsgemäß eine Aktualisierung eines Teilbereichs der digitalen Karten auf Basis von aktuellen Fahrzeugpositionen benachbarter Fahrzeuge.

Mittels Fahrzeug-zu-Fahrzeug-Kommunikation und gegebenenfalls Fahrzeug-zu-Infrastruktur-Kommunikation sendet jedes Fahrzeug seine eigene Position aus. Diese kann z. B. durch GPS oder Galileo ermittelt werden. Jedes Fahrzeug empfängt die Position von allen anderen Fahrzeugen innerhalb seiner Reichweite, ggf. über den Umweg über die Zentrale.

Da sich alle Fahrzeuge bewegen, ist es dadurch möglich, ähnlich einer Ameisenstraße zu erkennen, wo sich Straßen befinden. Hierbei ist gemeint, dass die Aktualisierungseinrichtung aus der Vielzahl an übermittelten Positionsdaten der anderen Fahrzeuge die aktuelle Straßenführung ermitteln kann. Hierbei können statistische Verfahren und Filter eingesetzt werden, um Fehlmessungen auszugleichen und die Genauigkeit des Ergebnisses zu erhöhen (obgleich jede einzelne Positionsmessung durchaus um mehrere Meter ungenau sein kann). Die Aktualisierungseinrichtung ist in der Lage, aus den einzelnen (aufbereiteten) Positionen der anderen Fahrzeuge die Straßenführung zu berechnen, also Straßen entsprechenden einzelnen Positionen zuzuordnen.

Auf diese Weise kann ein ganz neuer Kartenteil erstellt werden.

Mit den übermittelten Informationen kann also eine bereits vorhandene digitale Karte überprüft und ggf. korrigiert werden. Da vor allem vorausfahrende und entgegenkommende Fahrzeuge zu dieser Information beitragen, sind diese wichtigen Teile der Karte am Aktuellsten. Ungenauigkeiten durch GPS oder Galileo werden durch die Vielzahl der Informationen bereinigt und durch einen Abgleich mit der eigenen Position relativiert. Vor allem kritische Stellen, wie z. B. scharfe Kurven, sind trotz dieser Ungenauigkeiten deutlich zu erkennen.

Mittels Infrastruktur-zu-Fahrzeug-Kommunikation (also der Kommunikation zwischen der Zentrale und den einzelnen Fahrzeugen) ist es zudem möglich, an einer gefährlichen Stelle den Verlauf der Straße an dieser Stelle an alle Fahrzeuge zu senden und somit sicherzustellen, dass sämtliche Fahrzeuge an dieser Stelle eine aktuelle digitale Karte verwenden können. Selbst für Fahrzeuge ohne digitale Karte ist es möglich, mit dieser Information den Fahrer besser zu warnen oder durch Fahrerassistenzsysteme zu unterstützen.

Die Änderungen der Karte werden gespeichert, so dass sie beim nächsten Befahren derselben Strecke erneut zur Verfügung stehen und nicht wieder "gelernt" werden müssen.

Fig. 2 zeigt eine schematische Darstellung eines Aktualisierungssystems 200, welches eine Vielzahl von Fahrzeugen 101, 104, 203 mit entsprechenden Aktualisierungseinrichtungen 100 aufweist. Sämtliche Fahrzeuge 101, 104, 203 sind in der Lage, miteinander zu kommunizieren, wie durch die Pfeile 205, 206, 207 symbolisiert. Weiterhin sind sämtliche Fahrzeuge in der Lage, mit einer Zentrale, die einen Server 201 mit einer Antenne 202 aufweist, zu kommunizieren, wie durch die Pfeile 204, 208 symbolisiert.

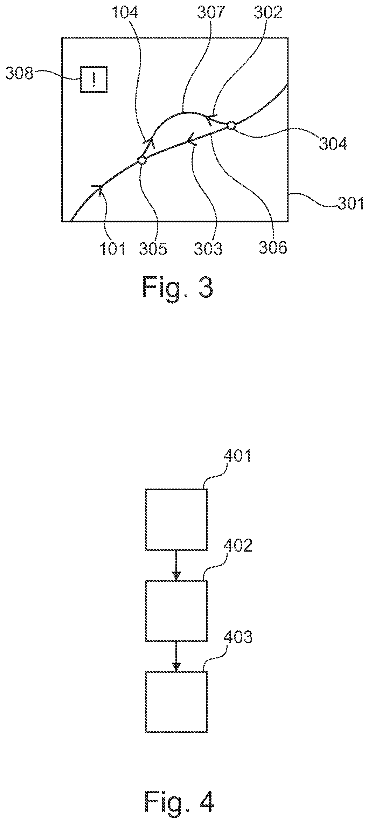

Fig. 3 zeigt eine schematische Darstellung eines Teilbereichs 301 einer digitalen Karte, in diesem Fall einer digitalen Navigationskarte. Das Fahrzeug 101 befindet sich auf einer Straße 306 und fährt auf die Abzweigung 305 zu. Das Fahrzeug 101 empfängt hierbei sowohl von dem entgegenkommenden Fahrzeug 303 als auch von den sich auf einer Ausweichroute 307 befindenden weiteren Fahrzeugen 104 und 302 Positionsdaten und andere Daten, die beispielsweise von einer Traktionskontrolle, wie ABS (Anti-Blockier-System), ASR (Antriebs-Schlupf-Regelung), ESP (Elektronisches Stabilitätsprogramm, kann auch Antriebs-Schlupf-Regelung beinhalten) oder EDS (Elektronische Differentialsperre), gemessen wurden.

Nach einer entsprechenden Auswertung der Daten wird automatisch ein Warnhinweis 308 eingeblendet und dem Fahrer auch akustisch mitgeteilt. Der Warnhinweis 308 beinhaltet die Information, dass sich auf der Strecke 306 zwischen der Ausfahrt 305 und der Ausfahrt 304 ein umgestürzter Baum befindet (diese Information ist von dem Fahrzeug 303 gemessen worden). Aufgrund der Positionsdaten der Fahrzeuge 104 und 302 weiß die Aktualisierungseinrichtung, dass die Gefahrenstelle über die Umgehung 307, die zum Ort 304 führt, umgegangen werden kann.

Die Umgehung 307 war dem Navigationssystem bisher nicht bekannt, da es sich hierbei um eine neue Strasse handelt.

Bewegt sich also das eigene Fahrzeug auf einer Straße, die noch nicht in seiner Karte verzeichnet ist, wird durch die Bewegung der vorausfahrenden und entgegenkommenden Fahrzeuge erkannt, dass es beispielsweise noch andere mögliche Straßen gibt. Beispielsweise kann auch erkannt werden, dass beispielsweise eine scharfe Kurve naht und der Fahrer kann entsprechend vor dieser Kurve gewarnt werden, ggf. akustisch.

Es ist also eine hochaktuelle, ortsspezifische Aktualisierung der digitalen Karte möglich.

Fig. 4 zeigt ein Flussdiagramm eines Verfahrens gemäß einem Ausführungsbeispiel der Erfindung. In Schritt 401 werden Positionsdaten und andere Messdaten von Fahrzeugen im Umfeld gesammelt. Diese Daten sind durch Fahrzeug-zu-Fahrzeug-Kommunikation und gegebenenfalls Fahrzeug-zu-Infrastruktur-Kommunikation dem Fahrzeug übertragen worden.

In Schritt 402 erfolgt eine lokale Aktualisierung der vorhandenen Karte durch diese übermittelten Positionsdaten von den Fahrzeugen im Umfeld, ggf. mit gleichzeitiger Beachtung von anderen Daten, wie beispielsweise Warndaten bezüglich einer Gefahrenstelle. In Schritt 403 erfolgt eine Speicherung der Änderungen der Karte entweder in der Karte selber oder auf einem getrennten Speichermedium. In diesem Fall müssen die Daten der digitalen Karte nicht geändert werden, um die Gefahr einer Beschädigung der Karte durch fehlerhaftes Speichern zu reduzieren.

Die Kommunikation zwischen der Zentrale und den Fahrzeugen und zwischen den einzelnen Fahrzeugen kann mit einer entsprechenden Verschlüsselung erfolgen, um Datensicherheit zu gewährleisten und Missbrauch zu vermeiden.

Ergänzend sei darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Aktualisierungseinrichtung (100) zur Erstellung und Aktualisierung einer digitalen Karte für ein erstes Fahrzeug (101), die Aktualisierungseinrichtung (100) aufweisend:
eine Kommunikationseinheit (102) ausgeführt zum Empfang von ersten Aktualisierungsdaten,
wobei die ersten Aktualisierungsdaten direkt von einem zweiten Fahrzeug (104) an das erste Fahrzeug übermittelt werden
wobei sich das zweite Fahrzeug im Umfeld des ersten Fahrzeugs befindet, so dass die ersten Aktualisierungsdaten einen Teil der digitalen Karte betreffen, der im Umfeld des ersten Fahrzeugs liegt;
eine Aktualisierungseinheit (103) ausgeführt
zur Erstellung oder zur Aktualisierung eines lokalen Teils der digitalen Karte auf Basis der Aktualisierungsdaten;
eine Warneinrichtung (114) ausgeführt zur Warnung des Fahrers vor Gefahren, die auf Basis der Aktualisierungsdaten identifiziert wurden,
wobei die ersten Aktualisierungsdaten auf zumindest einem Messwert einer Position eines zweiten Fahrzeugs (104) und auf Eingriffe eines ABS-Systems, eines ASR-Systems oder eines ESP-Systems basieren.

2. Aktualisierungseinrichtung nach Anspruch 1,
wobei die Aktualisierungseinrichtung eine Eingabeeinrichtung aufweist, über die der Fahrer bestimmen kann, welcher Teil der digitalen Karte aktualisiert werden soll.

3. Aktualisierungseinrichtung nach einem der vorhergehenden Ansprüche, die Aktualisierungseinrichtung weiterhin aufweisend:
eine Erfassungseinheit (105) ausgeführt zur Erfassung eines Messwertes einer Position des ersten Fahrzeugs;
wobei die Kommunikationseinheit (102) zur Übermittlung von zweiten Aktualisierungsdaten, die auf dem erfassten Messwert basieren, an das zweite Fahrzeug (104) ausgeführt ist.

4. Aktualisierungseinrichtung nach einem der vorhergehenden Ansprüche,
weiterhin ausgeführt zur statistischen Auswertung sämtlicher empfangener Aktualisierungsdaten.

5. Aktualisierungseinrichtung nach einem der vorhergehenden Ansprüche, weiterhin aufweisend:
eine Speichereinrichtung (113) ausgeführt zur Speicherung der Aktualisierung der digitalen Karte.

6. Aktualisierungseinrichtung nach einem der vorhergehenden Ansprüche,
wobei es sich bei der digitalen Karte um eine digitale Navigationskarte handelt.

7. Aktualisierungssystem (200) zur Erstellung und Aktualisierung einer digitalen Karte für ein erstes Fahrzeug (101), das Aktualisierungssystem (200) aufweisend:
eine erste Aktualisierungseinrichtung nach einem der Ansprüche 1 bis 6 in einem ersten Fahrzeug;
eine zweite Aktualisierungseinrichtung nach einem der Ansprüche 1 bis 6 in einem zweiten Fahrzeug; und
eine Zentrale (201, 202) zum Empfang von Aktualisierungsdaten von dem ersten Fahrzeug und zum Übermitteln der Aktualisierungsdaten an das zweite Fahrzeug.

8. Verwendung einer Aktualisierungseinrichtung nach einem der Ansprüche 1 bis 6 in einem Fahrzeug.

9. Verfahren zur Erstellung und Aktualisierung einer digitalen Karte für ein erstes Fahrzeug, das Verfahren aufweisend die Schritte:
Empfang von Aktualisierungsdaten in dem ersten Fahrzeug,
wobei die Aktualisierungsdaten direkt von einem zweiten Fahrzeug (104) an das erste Fahrzeug übermittelt werden, wobei sich das zweite Fahrzeug im Umfeld des ersten Fahrzeugs befindet, so dass die ersten Aktualisierungsdaten einen Teil der digitalen Karte betreffen, der im Umfeld des ersten Fahrzeugs liegt;
Erstellung oder Aktualisierung eines lokalen Teils der digitalen Karte auf Basis der Aktualisierungsdaten;
Warnung des Fahrers vor Gefahren, die auf Basis der Aktualisierungsdaten identifiziert wurden,
wobei die Aktualisierungsdaten auf zumindest einem Messwert einer Position eines zweiten Fahrzeugs (104) basieren und auf Eingriffe eines ABS-Systems, eines ASR-Systems oder eines ESP-Systems.

10. Computerprogrammprodukt, das, wenn es auf einem Prozessor (103) ausgeführt wird, den Prozessor (103) anleitet, die Schritte gemäß Anspruch 9 durchzuführen.

11. Computerlesbares Medium, auf dem ein Computerprogrammprodukt gespeichert ist, das, wenn es auf einem Prozessor (103) ausgeführt wird, den Prozessor (103) anleitet, die Schritte gemäß Anspruch 9 durchzuführen.

## Claims

1. Update device (100) for generating and updating a digital map for a first vehicle (101), the update device (100) having:
a communication unit (102) designed to receive first update data,
wherein the first update data are transmitted directly from a second vehicle (104) to the first vehicle,
wherein the second vehicle is situated in the surroundings of the first vehicle, so that the first update data relate to a portion of the digital map that is in the surroundings of the first vehicle;
an update unit (103) designed to generate or update a local portion of the digital map on the basis of the update data;
a warning device (114) designed to warn the driver about hazards that were identified on the basis of the update data,
wherein the first update data are based on at least one measured value for a position of a second vehicle (104) and on interventions by an ABS system, an ASR system or an ESP system.

2. Update device according to Claim 1,
wherein the update device has an input device via which the driver can determine which portion of the digital map is supposed to be updated.

3. Update device according to either of the preceding claims, the update device furthermore having:
a capture unit (105) designed to capture a measured value for a position of the first vehicle;
wherein the communication unit (102) is designed to transmit second update data, which are based on the captured measured value, to the second vehicle (104).

4. Update device according to one of the preceding claims, furthermore designed to statistically evaluate all of the received update data.

5. Update device according to one of the preceding claims, furthermore having:
a memory device (113) designed to store the update of the digital map.

6. Update device according to one of the preceding claims, wherein the digital map is a digital navigation map.

7. Update system (200) for generating and updating a digital map for a first vehicle (101), the update system (200) having:
a first update device according to one of Claims 1 to 6 in a first vehicle;
a second update device according to one of Claims 1 to 6 in a second vehicle; and
a control centre (201, 202) for receiving update data from the first vehicle and for transmitting the update data to the second vehicle.

8. Use of an update device according to one of Claims 1 to 6 in a vehicle.

9. Method for generating and updating a digital map for a first vehicle, the method having the steps of:
receiving update data in the first vehicle,
wherein the update data are transmitted directly from a second vehicle (104) to the first vehicle,
wherein the second vehicle is situated in the surroundings of the first vehicle, so that the first update data relate to a portion of the digital map that is in the surroundings of the first vehicle;
generating or updating a local portion of the digital map on the basis of the update data;
warning the driver about hazards that were identified on the basis of the update data,
wherein the update data are based on at least one measured value for a position of a second vehicle (104) and on interventions by an ABS system, an ASR system or an ESP system.

10. Computer program product that, when executed on a processor (103), instructs the processor (103) to perform the steps according to Claim 9.

11. Computer-readable medium storing a computer program product that, when executed on a processor (103), instructs the processor (103) to perform the steps according to Claim 9.

## Revendications

1. Dispositif d'actualisation (100) destiné à créer et à actualiser une carte numérique pour un premier véhicule (101), le dispositif d'actualisation (100) comprenant :
une unité de communication (102) conçue pour recevoir des premières données d'actualisation,
les premières données d'actualisation étant communiquées au premier véhicule directement par un deuxième véhicule (104) le deuxième véhicule se trouvant dans l'environnement du premier véhicule, de sorte que les premières données d'actualisation concernent une partie de la carte numérique qui se trouve dans l'environnement du premier véhicule ;
une unité d'actualisation (103) conçue pour créer ou pour actualiser une partie locale de la carte numérique sur la base des données d'actualisation ;
un dispositif d'alerte (114) conçu pour alerter le conducteur des dangers qui ont été identifiés sur la base des données d'actualisation,
les premières données d'actualisation se basant au moins sur une valeur mesurée d'une position d'un deuxième véhicule (104) et sur des interventions d'un système ABS, d'un système ASR ou d'un système ESP.

2. Dispositif d'actualisation selon la revendication 1, le dispositif d'actualisation comprenant un dispositif de saisie par le biais duquel le conducteur peut déterminer quelle partie de la carte numérique doit être actualisée.

3. Dispositif d'actualisation selon l'une des revendications précédentes, le dispositif d'actualisation comprenant en outre :
une unité d'acquisition (105) conçue pour acquérir une valeur mesurée d'une position du premier véhicule ;
l'unité de communication (102) étant conçue pour communiquer au deuxième véhicule (104) des deuxièmes données d'actualisation qui se basent sur la valeur mesurée acquise.

4. Dispositif d'actualisation selon l'une des revendications précédentes, conçu en outre pour l'interprétation statistique de toutes les données d'actualisation reçues.

5. Dispositif d'actualisation selon l'une des revendications précédentes, le dispositif d'actualisation comprenant en outre :
un dispositif de mémorisation (113) conçu pour mémoriser l'actualisation de la carte numérique.

6. Dispositif d'actualisation selon l'une des revendications précédentes, la carte numérique étant une carte de navigation numérique.

7. Système d'actualisation (200) destiné à créer et à actualiser une carte numérique pour un premier véhicule (101), le système d'actualisation (200), comprenant :
un premier dispositif d'actualisation selon l'une des revendications 1 à 6 dans un premier véhicule ;
un deuxième dispositif d'actualisation selon l'une des revendications 1 à 6 dans un deuxième véhicule ; et
une centrale (201, 202) destinée à recevoir des données d'actualisation de la part du premier véhicule et communiquer les données d'actualisation au deuxième véhicule.

8. Utilisation d'un dispositif d'actualisation selon l'une des revendications 1 à 6 dans un véhicule.

9. Procédé de création et d'actualisation d'une carte numérique pour un premier véhicule, le procédé comprenant les étapes suivantes :
réception de données d'actualisation dans le premier véhicule, les premières données d'actualisation étant communiquées au premier véhicule directement par un deuxième véhicule (104),
le deuxième véhicule se trouvant dans l'environnement du premier véhicule, de sorte que les premières données d'actualisation concernent une partie de la carte numérique qui se trouve dans l'environnement du premier véhicule ;
création ou actualisation d'une partie locale de la carte numérique sur la base des données d'actualisation ;
alerte du conducteur des dangers qui ont été identifiés sur la base des données d'actualisation,
les données d'actualisation se basant au moins sur une valeur mesurée d'une position d'un deuxième véhicule (104) et sur des interventions d'un système ABS, d'un système ASR ou d'un système ESP.

10. Produit de programme informatique qui, lorsqu'il est exécuté sur un processeur (103), commande le processeur (103) pour mettre en œuvre les étapes selon la revendication 9.

11. Support lisible par ordinateur sur lequel est enregistré un produit de programme informatique qui, lorsqu'il est exécuté sur un processeur (103), commande le processeur (103) pour mettre en œuvre les étapes selon la revendication 9.
